# EUROPEAN PATENT SPECIFICATION

(11) **EP 0 577 346 B1**
(45) Date of publication and mention of the grant of the patent: **29.01.1997**
(21) Application number: 93304977.7
(22) Date of filing: 25.06.1993
(51) Int. Cl.: H02G 5/06, H01B 17/50

(54) **Gas-insulated high voltage apparatus having an insulating component**
Gasisoliertes Hochspannungsgerät mit einem elektrisch isolierenden Bauelement
Appareil à haute tension à isolation gazeuse muni d'un composant isolant

(30) Priority: 02.07.1992 JP 175228/92
(43) Date of publication of application: 05.01.1994
(73) Proprietor: HITACHI, LTD., Chiyoda-ku, Tokyo 101 (JP)
(72) Inventor: Yamagiwa, Tokio, Ibaraki 316 (JP); Endo, Fumihiro, Ibaraki 316 (JP)
(74) Representative: Paget, Hugh Charles Edward

(56) References cited:
- EP-A- 0 102 185
- EP-A- 0 119 838
- DE-A- 3 634 946
- US-A- 4 166 193

## Description

This invention relates to a gas-insulated high voltage electrical apparatus containing an insulating component, particularly apparatus having a container filled with an insulating gas such as SF₆ and an electrical conductor to which DC potential is applied, the insulating component being connected to the conductor, for example to support it.

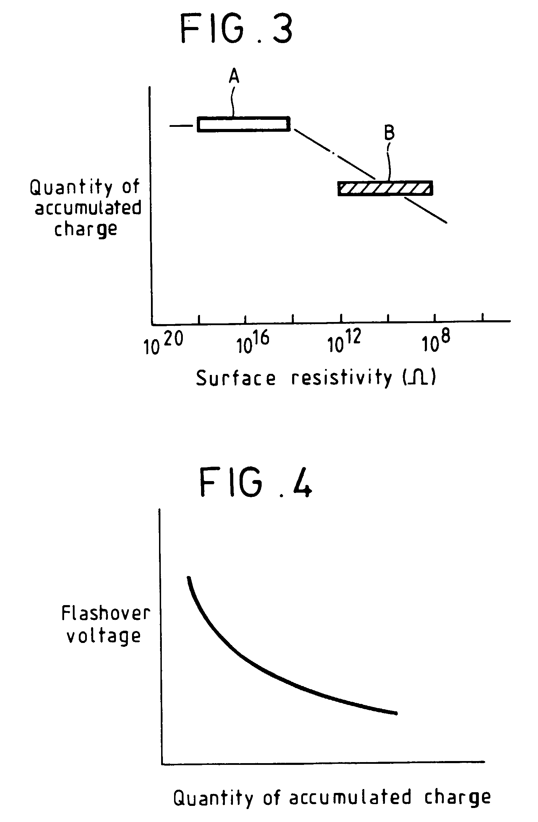

The surface discharge or surface flashover characteristic, which is one of the characteristics of an insulator in a gas-insulated apparatus, is greatly different between AC and DC voltage. The characteristic of DC surface discharge in a gas is described in detail in the Japanese-language document "DC insulation of a gas-insulated switchgear", Technical Report (Part II) No. 397 (December 1991), pages 17 to 23 issued by The Institute of Electrical Engineers of Japan. This document describes how insulation characteristics of an insulator under DC-voltage conditions are influenced by charge produced on the surface of the insulating component, and the surface breakdown voltage of the insulating component varies in dependence on the amount of the charge accumulated. Fig. 4 accompanying this specification illustrates this phenomenon, and shows that, when the amount of accumulated charge increases, the breakdown voltage tends to decrease. In an attempt to solve this problem, as described in the document, it has been common practice to select the shape of the insulating component so that it is not easily charged, for example by providing ribs on the surface of the insulating component.

The present inventors believe that charge accumulation on the surface of an insulating component may be due to any one of several causes, particularly conduction in the body of the insulator, conduction at the surface of the insulator, contact with the insulator surface of fine dust or particles from other components of the apparatus, the production of ions from gas moleculates in the apparatus, and ionization due to cosmic rays or x-rays. Particularly in the case of vacuum switchgear, there is a problem of bombardment of the insulator surface by electrons emitted from a cathode, which causes emission of secondary electrons from the insulator surface. This is not a significant problem in a gas-filled apparatus, in which the energy of any emitted electrons is much reduced, e.g. by ionisation of the gas molecules, so that secondary electrons are not produced.

As mentioned above, one attempted solution of the problem has been to shape the surface of the insulator, in order to increase the surface path length. Another solution proposed is to give the insulator a convexly curved surface, which is intended to coincide with the electric field lines, in order to reduce the bombardment of the surface by electrons or other charged particles. A different solution proposed has been to treat the insulator surface by water jet abrasion.

US-A-4 688 142 describes an insulator for a gas-insulated high voltage current transmission system, having a coating consisting of a resinous binder containing a powdered filler consisting of particles of chromium oxide and/or iron oxide, which are said to have an inherently high resistivity. The purpose of the coating appears to be to achieve a controlled current distribution on the insulator surface, thereby to provide a field distribution with reduced local peaks of field strength. Typically the coating contains 30% by volume of the oxide particles and has a thickness of 20 to 300 µm, e.g. 80 µm. The mean grain size of the particles in one example is 1.2 µm.

It has been proposed by two researchers (Cross and Sudarshan) to reduce the surface flashover of insulators in vacuum by applying cuprous oxide (Cu₂O) or chromium oxide (Cr₂O₃) coatings to the surface of the insulator (IEEE Transactions on Electrical Insulation, Vol. EI-9, No 4, December 1974, pages 146 to 150 and Vol. EI-11, No. 1, March 1976, pages 32 to 35). Cross and Sudarshan found that the cuprous oxide coating on an alumina body eliminated the conditioning effect observed in the case of uncoated insulators under both DC and AC voltages. The conditioning effect is a progressive increase in the flashover voltage of the insulator, with number of flashovers applied. In this case the Cu₂O coating did not cause an increase of flashover voltage, after conditioning. In the case of the chromium oxide coatings, there was a considerable increase in flashover voltage, as well as reduction of the conditioning effect, due to the application of the chromium oxide layer. The authors attributed these effects to the elimination of positive surface charging, because the coating considerably reduced the secondary electron emission of the insulator surface. It appears that they were concerned with charges which accumulate very rapidly on the insulator surface, as a result of secondary electron emission. They were concerned also to avoid a resistive heating effect of the insulator, and therefore proposed a coating with a high resistance combined with a low secondary electron coefficient. For cuprous oxide a coating thickness of 20 to 200 nm was produced by coating the insulator with copper by vacuum deposition and then heating in a sealed tube. In the case of chromium oxide, this was deposited from aqueous solution.

As already mentioned, secondary electron emission is not a problem in gas-insulated systems. The present inventors believe that the build up of charge on the insulator surface is very much slower in a gas-insulating system (a matter of hours) than in a vacuum system (fractions of a second), and electron bombardment from a cathode is also not a problem, because the electronic energy is much lower due to the presence of the insulating gas such as SF₆. Apparently, therefore, the suggestions made by Cross and Sudarshan do not apply to gas-insulated systems. Cross and Sudarshan suggest that it is impossible conductively to remove the charges as fast as they are formed, because the necessary current would cause severe heating of the surface in a vacuum.

It is an object of the invention to provide a gas-insulated high voltage electrical apparatus, in which the problem of reduction of surface flashover voltage due to charge accumulation on the surface of the insulating component is reduced or eliminated.

The present inventors have surprisingly found that a coating having reduced resistivity, relative to the material of the body of the insulating component in a gas-insulated high voltage apparatus, can successfully dissipate charge tending to accumulate on the surface of the insulator, without unacceptably increasing resistive current flow. Although among the coatings which can be used in the present invention, those employed by Cross and Sudarshan are suitable, they are employed in the present invention in a different apparatus, i.e. apparatus filled with insulating gas rather than a vacuum and are believed to have a significantly different function, i.e. conduction of charge rather than prevention of secondary electron emission.

Thus the invention can provide an increase of flashover voltage, e.g. in the range of 20 to 40%, and alternatively the invention permits the use of a smaller insulator having the same flashover voltage as a prior art insulator. Various other advantages of the invention or embodiments thereof will appear from the description below.

According to the invention in one aspect there is provided a gas-insulated high voltage electrical apparatus as set out in claim 1. The surface resistivity of the film will in general be lower than the surface resistivity of a film having the same thickness made from the insulating material of the insulator body, e.g. not more than 1/10 of the latter value. Preferably the film has a surface resistivity in the range of 10⁸ to 5 x 10¹⁶ Ω. With epoxy resin insulator bodies, a surface resistivity of 10¹³ to 3 x 10¹⁶ Ω has been obtained, but lower values, e.g. 10⁸ to 10¹² Ω, are also appropriate. The thickness of the film is in the range of 20 to 200 nm.

The film is suitably applied to an insulator body having a surface resistivity in the range of 10¹⁴ to 10¹⁸ Ω.

To provide an effective conductive path for dissipation of electric charge, the film on the surface of the insulator may contact an electrode or other conductor at one or both sides of the insulating component.

While in principle any suitable conductive or semiconductive material can be employed for the surface film on the insulator body, such a film must be capable of appropriate bonding to the surface and must provide a suitable surface resistivity as indicated above. Suitable methods of forming the film are for example chemical vapour deposition, physical vapour deposition, sputtering and vacuum deposition. It is desirable that the film is uniformly applied on all parts exposed to the insulating gas of the gas-insulated apparatus.

The charge-dissipating film used in the present invention has the functions of permitting surface charge to pass along the insulator, and thereby dissipating the charge. A further advantage is that the film tends to increase the uniformity of surface resistivity of the insulator, thereby avoiding regions of especially high resistivity at which charge may tend to accumulate. Another advantage is that the coating, due to its conductivity, reduces the tendency of foreign metal particles to adhere to the insulator surface, which may be a cause of flashover. If a charged metal particle lands on the surface of the insulator, the charge is rapidly dissipated by the film, so that the particle quickly falls off and is no longer retained by electrostatic attraction.

Another advantage is that ease of transport and handling of the insulator is improved because the film allows the insulator to be touched by hand, and less problem is caused by contamination of the surface of the insulator. In the past it has been thought that such insulators in gas-insulated systems should not be touched by hand. A further advantage is increased safety for personnel carrying out maintenance. Charges accumulated on the insulator are more quickly dissipated, whereas in prior art devices surface charge may remain on the insulators for long periods of time, even days, which creates a risk for maintenance personnel.

A method of application of the film which involves contact of the insulator with water, such as the deposition of chromium oxide from the solution as suggested by Cross and Sudarshan, is not preferred. Even if a small amount of residual water remains on or in the insulator, this water evaporates inside the gas insulated tank. SF₆ is decomposed partially on operation of for example an interrupter in such an apparatus, and the product of reaction of a decomposition component with water may be HF, which corrodes.

Preferred materials for the coating film of the invention are Cu, Cr, Al, Fe, cuprous oxide, chromium oxide and ferric oxide (Fe₂O₃).

In gas-insulated high voltage electrical systems it is known to use insulator bodies made of synthetic resin, particularly epoxy resin. The epoxy resin may include a particulate filler such as alumina, and the use of such a resin is preferred in accordance with the present invention. The film used in the present invention provides a particular advantage in this case, since this filled epoxy resin has poor uniformity of its surface resistivity due to the presence of the filler particles. The film applied improves this surface uniformity of resistivity. It is also relevant to the present discussion that conditioning (i.e. application of flashovers to improve flashover voltage), whose reduction is described as an advantage by Sudarshan and Cross, is not required for epoxy resin insulator and indeed is highly disadvantageous, because the flashovers needed to effect conditioning may cause melting of the epoxy resin material. On the other hand, if flashover occurs during use of the insulating component of the present invention, the surface film is likely to protect the epoxy resin from the effects of the flashover.

The invention is particularly applicable to gas-insulated high voltage electrical apparatus wherein a DC voltage is applied to the conductor, particularly high voltage, e.g. a voltage above 50 kV.

Embodiments of the invention will now be described by way of non-limitative example with reference to the accompanying drawings, in which:-
Fig. 1 is a somewhat schematic sectional view of a gas-insulated apparatus embodying the present invention;
Fig. 2 is a sectional view of a post-type spacer, forming an insulating component employed in the apparatus of Fig. 1;
Fig. 3 is a graph showing one example of advantages obtained by the present invention;
Fig. 4 is a graph showing the reduction of flashover voltage by accumulation of charge on the surface of an insulating component; and
Fig. 5 is an illustration of an insulator body undergoing a flashover test; and
Fig. 6 is a diagram of a method of measurement of surface resistivity.

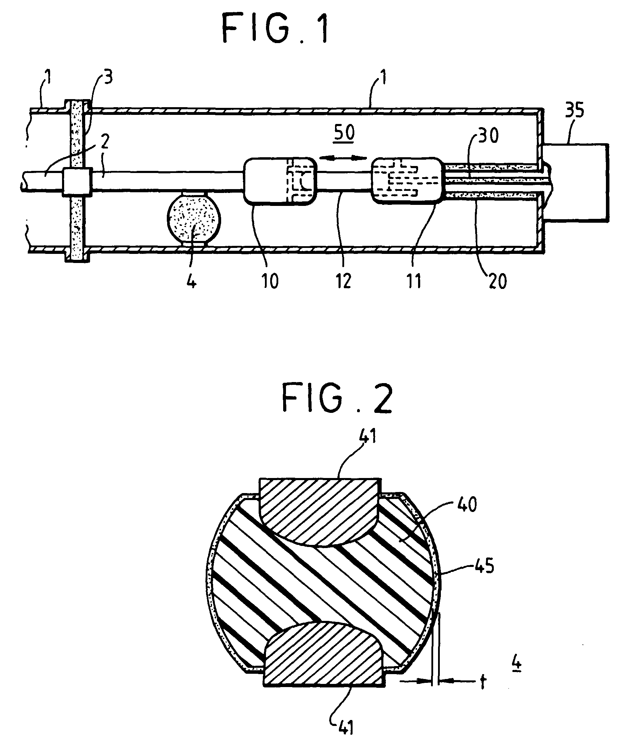

The gas-insulated apparatus of Fig. 1 comprises a sealed grounded tank 1, a conductor 2, a disconnecting device 50 including a movable electrode 12, a supporting conductor 11 for the movable electrode 12 and a fixed electrode 10. Various insulating components support these high voltage conductor members, in particular a gas-compartment defining insulator spacer 3, a conductor-supporting post-type spacer 4, an insulating support tube 20 for supporting the conductor 11, and an insulating operating rod 30 for driving the movable electrode 12, the insulating operating rod 30 being coupled to an operating unit 35 in an insulated manner. This is a generally conventional construction. The insulating gas under pressure filling the tank 1 in usual manner is SF₆.

In this gas-insulated apparatus having the above described arrangement, an insulating component according to the present invention is used as each of the insulating spacer 3, the post-type spacer 4, the insulating support tube 20 and the insulating operating rod 30. A thin film of sputtered metal or oxide is formed on at least the whole surface of each of these insulating components at the region or regions contacting the insulating gas.

Fig. 2 shows in detail the post-type spacer 4 used in this gas-insulated apparatus. The post-type spacer 4 includes an epoxy-based resin body 40 containing alumina filler particles, and embedded electrodes 41 which are provided in the opposite end face portions of the epoxy-based resin body 40 for the purpose of mounting the post-type spacer 4 and of mitigating electric field strength. A thin film 45 is formed on the surface of the resin body 40 by evaporation or sputtering of metal particles. The film 45 contacts the electrodes 41 at both electrical sides of the insulator. Though the thickness t of the thin film 45 depends on the required insulation resistance values, it is preferably selected to be approximately 20 to 200 nm to achieve the effect and advantage of the present invention. The surface resistivity of the film is substantially lower than that of an equivalent film (of the same thickness) of the epoxy-based material of the body 40.

Preferred material for the thin film 45 is Cu, Cr, Al or Fe and the oxides Cu₂O, Cr₂O₃ and Fe₂O₃.

Fig. 3 shows notionally the surface resistivity of a spacer and the amount of charge accumulated on the surface of the spacer. As compared to a conventional uncoated spacer A having a surface resistivity value of 10¹⁴ to 10¹⁸ Ω, the surface resistivity value of a spacer B according to the present invention may be as low as 10⁸ to 10¹² Ω, whereby the amount of accumulated charge on the insulator surface is reduced. As one example of the present invention, it has been possible to improve the nominal withstand voltage value for a DC voltage by 20-40%.

Incidentally, since an insulating component having a surface film greatly differs from an untreated insulating component in surface resistivity, it is preferable that the surface colors of the former and latter insulating components be made different so that they can be visually distinguished.

According to the present invention as described above, it is possible to enhance the withstand voltage of the insulating component. In consequence, it is possible to improve the insulation reliability of the gas-insulated apparatus and it is also possible to reduce the size and weight of the apparatus.

One method of forming the thin film on the insulator surface, by sputtering, will now be described.

An epoxy resin insulator body is placed at a location between and spaced from a high voltage electrode and a grounded electrode both made of copper. They are sealed in a vacuum chamber which is evacuated and then filled with argon at low pressure. A half-wave rectified 50 Hz AC voltage is applied between the electrodes. Due to discharge between the high voltage electrode and the grounded electrode, Ar ions impinge on the high voltage electrode to sputter metallic copper. The sputtered copper then reaches the epoxy resin specimen to accumulate thereon forming a copper thin film. The sputtering conditions for forming a sputter film on the epoxy resin specimen are as follows:-

| | |
|---|---|
| Voltage applied | 2000 V |
| Current | 12 mA |
| Ar gas pressure | 0.04 torr approx. |
| Sputtering time | 10 minutes |

In order to obtain a uniform thickness of film, the epoxy resin specimen was rotated approximately 30 revolutions per minute. The surface resistivity of the epoxy resin specimen having this sputter film formed thereon is found to be approximately 1 x 10¹⁵ Ω. Since the surface resistivity of a virgin epoxy resin specimen was 5 x 10¹⁶ Ω, its value was decreased by 1/50 by provision of the sputter film.

Further, by changing the pressure of Ar gas in a range of 0.02 to 0.05 torr with the application voltage maintained at 2000 V, sputtered film thicknesses can be varied as preferred so as to enable the surface resistivity to be controlled for example in the range of 3 x 10¹⁶ to 1 x 10¹³ Ω.

On epoxy resin specimens of 40 mm in length and 50 mm in diameter were formed sputtered Cu films of a reduced surface resistivity according to the foregoing method. In this case, the surface resistivity was decreased from approximately 2 x 10¹⁶ to approximately 3 x 10¹⁴ Ω.

The flashover voltage measured upon subjecting this insulator to polarity inversion after prestressing at a DC -200 kV was 450 kV. A flashover voltage for the virgin epoxy resin specimen without prestress (without polarity inversion) was 380 kV. The withstand voltage was thus increased by the Cu film by about 20%, in comparison with the case of the virgin specimen not subjected to polarity inversion. It has been thought hitherto that inversion of polarity generally decreases the flashover voltage. The forming of a sputtered film, however, prevents this decrease.

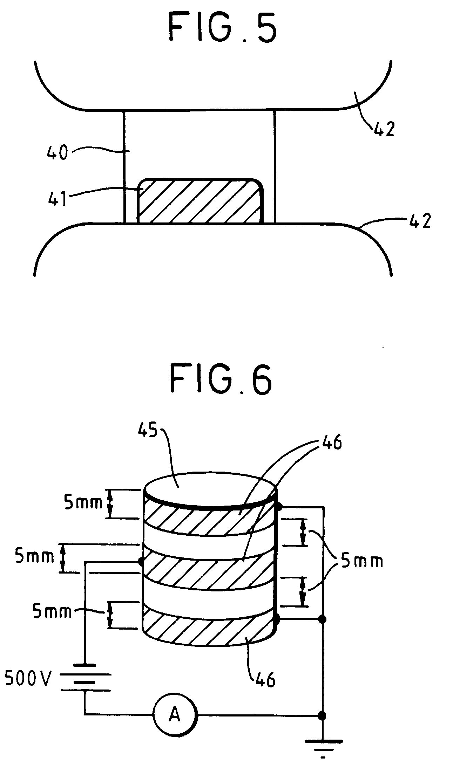

The arrangement of the epoxy resin body undergoing this flashover test is shown in Fig. 5. The epoxy resin body 40 has one embedded Al electrode 41 and is located between electrodes 42. The body 40 is a cylinder 40 mm high and 50 mm in diameter. The electrode 41 is 15 mm high and 40 mm in diameter.

A suitable method of measurement of surface resistivity of an insulator body (with or without the conductive film provided according to the invention) is illustrated by Fig. 6.

Three copper tapes 46 of 5 mm width are wound around the specimen 45 at 5 mm spacings as shown in Fig. 1, and connected to a circuit including a 500V DC voltage source and an ammeter as shown. The upper and the lower copper tapes 46 serve as guard electrodes and the center copper tape 46 serves as a high voltage electrode. The specimen 45 is then placed in a shield box which has been conditioned at 25°C. After one to two minutes, a voltage is applied, and then after one minute a measurement value is read. From this the surface resistivity is calculated.

## Claims

1. A gas-insulated high voltage electrical apparatus having a container (1) filled with an insulating gas, a high voltage conductor (2,10,12) inside the container (1) and an insulating component (3,4,20,30) connected to the conductor (2,10,12), the insulating component (3,4,20,30) having an insulator body (40) made of insulator material, said insulator body having on at least part of its surface a film (45) of an electrically conductive or semi-conductive material for dissipation of electrical charge on said body, said film (45) having a thickness in the range 20 to 200 nm.

2. An apparatus according to claim 1 wherein said film (45) has a surface resistivity lower than the surface resistivity of a film having the same thickness made from said insulator material of said insulator body.

3. An apparatus according to claim 1 or claim 2 wherein said insulator material of the insulator body (40) is at least partly an epoxy resin containing a filler.

4. An apparatus according to any one of claims 1 to 3 wherein said film (45) has a surface resistivity in the range 10⁸ to 5 x 10¹⁶ Ω.

5. An apparatus according to any one of claims 1 to 4 wherein said insulator body (40) has a surface resistivity in the range of 10¹⁴ to 10¹⁸ Ω.

6. An apparatus according to any one of claims 1 to 5 wherein said material of said film (45) is selected from Cu, Cr, Al, Fe, Cu₂O, Cr₂O₃ and Fe₂O₃.

7. An apparatus according to any one of claims 1 to 7 wherein said insulating gas is SF₆.

## Patentansprüche

1. Gasisolierte elektrische Hochspannungsvorrichtung mit einem mit einem isolierenden Gas gefüllten Behälter (1), einem Hochspannungsleiter (2, 10, 12) innerhalb des Behälters (1) und einem mit dem Leiter (2, 10, 12) verbundenen Isolierelement (3, 4, 20, 30), das einen aus Isoliermaterial hergestellten Isolierkörper (40) aufweist, der auf mindestens einem Teil seiner Oberfläche mit einem Film (45) eines elektrisch leitfähigen oder halbleitenden Materials zur Ableitung einer elektrischen Ladung auf dem Körper und einer Dicke im Bereich von 20 bis 200 nm versehen ist.

2. Vorrichtung nach Anspruch 1, wobei der Film (45) einen geringeren spezifischen Oberflächenwiderstand aufweist als ein Film der gleichen Dicke, der aus dem Isoliermaterial des Isolierkörpers hergestellt ist.

3. Vorrichtung nach Anspruch 1 oder 2, wobei das Isoliermaterial des Isolierkörpers (40) mindestens teilweise ein ein Füllmittel enthaltendes Epoxydharz ist.

4. Vorrichtung nach einem der Ansprüche 1 bis 3, wobei der Film (45) einen spezifischen Oberflächenwiderstand im Bereich von 10⁸ bis 5 • 10¹⁶ Ω aufweist.

5. Vorrichtung nach einem der Ansprüche 1 bis 4, wobei der Isolierkörper (40) einen spezifischen Oberflächenwiderstand im Bereich von 10¹⁴ bis 10¹⁸ Ω aufweist.

6. Vorrichtung nach einem der Ansprüche 1 bis 5, wobei für das Material des Films Cu, Cr, Al, Fe, Cu₂O, Cr₂O₃ und/oder Fe₂O₃ ausgewählt ist.

7. Vorrichtung nach einem der Ansprüche 1 bis 6, wobei das isolierende Gas SF₆ ist.

## Revendications

1. Appareil électrique à haute tension à isolation gazeuse comportant une enceinte (1) remplie de gaz isolant, un conducteur (2,10,12) de haute tension à l'intérieur de l'enceinte (1) et un composant isolant (3,4,20,30) relié au conducteur (2,10,12), le composant isolant (3,4,20,30) comprenant un corps isolateur (4) en matière isolante, ledit corps isolateur ayant sur au moins une partie de sa surface une pellicule (45) de matériau électriquement conducteur ou semi-conducteur pour la dissipation de la charge électrique sur ledit corps, ladite pellicule (45) ayant une épaisseur comprise entre 20 et 200 nm.

2. Appareil selon la revendication 1, dans lequel ladite pellicule (45) a une résistivité superficielle inférieure à la résistivité superficielle d'une pellicule de même épaisseur réalisée avec ladite matière isolante dudit corps isolateur.

3. Appareil selon la revendication 1 ou la revendication 2, dans lequel ladite matière isolante du corps isolateur (40) est au moins partiellement une résine époxy contenant une charge.

4. Appareil selon l'une quelconque des revendications 1 à 3, dans lequel ladite pellicule (45) a une résistivité superficielle comprise entre 10⁸ et 5 x 10¹⁶ Ω.

5. Appareil selon l'une quelconque des revendications 1 à 4, dans lequel ledit corps isolateur (40) a une résistivité superficielle comprise entre 10¹⁴ et 10¹⁶ Ω.

6. Appareil selon l'une quelconque des revendications 1 à 5, dans lequel ledit matériau de ladite pellicule (45) est choisi parmi Cu, Cr, Al, Fe, Cu₂O, Cr₂O, Cr₂O₃ et Fe₂O₃.

7. Appareil selon l'une quelconque des revendications 1 à 7, dans lequel ledit gaz isolant est du SF₆.
